# EUROPÄISCHE PATENTSCHRIFT

(11) **EP 3 397 025 B1**
(45) Veröffentlichungstag und Bekanntmachung des Hinweises auf die Patenterteilung: **13.05.2020**
(21) Anmeldenummer: 18166306.3
(22) Anmeldetag: 09.04.2018
(51) Int. Cl.: H05B 33/08, B60Q 1/00, H02M 3/00

(54) **SPEISESCHALTUNG ZUR VERSORGUNG VON LEDS AUS EINER PRIMÄREN GLEICHSPANNUNG**
POWER SUPPLY CIRCUIT FOR SUPPLYING LEDS FROM A PRIMARY DC VOLTAGE
CIRCUIT D'ALIMENTATION DESTINÉ À ALIMENTER DES DEL À PARTIR D'UNE TENSION CONTINUE PRIMAIRE

(30) Priorität: 26.04.2017 AT 503372017
(43) Veröffentlichungstag der Anmeldung: 31.10.2018
(73) Patentinhaber: ZKW Group GmbH, 3250 Wieselburg (AT)
(72) Erfinder: Weber, Emanuel, 2500 Baden (AT); Koller, Jan, 1120 Wien (AT)
(74) Vertreter: Patentanwaltskanzlei Matschnig & Forsthuber OG

(56) Entgegenhaltungen:
- DE-A1-102008 010 320
- US-A1- 2015 022 169
- US-B1- 9 578 701

## Beschreibung

Die Erfindung bezieht sich auf eine Speiseschaltung zur Versorgung zumindest einer, in einem LED-Stromkreis angeordneten, LED aus einer primären Gleichspannung, wobei in dem LED-Stromkreis ein Regeltransistor und ein Stromfühler liegen und ein Komparator vorgesehen ist, dessen Ausgang mit dem Steuereingang des Regeltransistors verbunden ist, wobei einem ersten Eingang des Komparators ein Sollwert für den Strom im LED-Stromkreis und einem zweiten Eingang des Komparators ein vom dem Stromfühler erfasster Istwert des LED-Stromkreises zugeführt ist, wobei zwischen dem LED-Stromkreis, der die Serienschaltung des LED-Stromkreises, des Regeltransistors und des Stromfühlers umfasst, und der primären Gleichspannung ein Vorwandler angeordnet ist, der in Abhängigkeit von der Höhe der primären Gleichspannung diese auf eine Zwischenkreisspannung mit einem für den LED-Stromkreis gewünschten festgelegten Wert wandelt.

LEDs werden heutzutage in unterschiedlichen Beleuchtungsbereichen eingesetzt und in hochwertigeren Anwendungen mit elektronischen Speiseschaltungen angesteuert. Speziell bei Verwendung von LEDs als Hochleistungs-Lichtquellen werden sehr hohe Anforderungen an die genaue Einhaltung des Speisestroms gelegt. Ein Beispiel hierfür ist die Verwendung von LEDs in Scheinwerfersystemen bei Kraftfahrzeugen. Um den abgegebenen Lichtstrom möglichst konstant zu halten, müssen Stromregler unterschiedlichster Art verwendet werden, wie Schaltwandler und lineare Stromquellen.

Die Schwierigkeit bei der Ansteuerung von LEDs im Automotive-Bereich ist, dass die zur Verfügung stehende Versorgungsspannung nicht konstant ist und sich typischerweise im Falle von 12 Volt Stromversorgungen in Kraftfahrzeugen zwischen 9 Volt und 18 Volt bewegt. Werden in diesem Fall lineare Regler eingesetzt, so kommt es immer wieder zu Betriebszuständen, in denen am Regler extrem hohe Verlustleistungen anfallen. Aus diesem Grunde verwendet man auch Schaltwandler, doch ist deren Einsatz allerdings aus Kostengründen nicht immer wünschenswert.

Eine Speiseschaltung der gegenständlichen Art ist aus dem Dokument DE 10 2008 010320 A1 bekannt geworden. Der Vorwandler ist hier als DC/DC-Wandler mit einem Transformator, einem Gleichrichter und einem Glättungskondensator konzipiert und ist daher verhältnismäßig kostspielig und verlustbehaftet.

Das Dokument US 2015/022169 A1 zeigt ein äußerst komplex konzipiertes Spannungsregelsystem, in welchem auch kapazitive Wandler mit gesteuerten Längsschaltern zum Einsatz kommen, wobei die Hauptaufgabe des Systems darin liegt, die Restwelligkeit gering zu halten.

Eine Aufgabe der Erfindung liegt darin, eine Speiseschaltung zur Versorgung von LEDs bereitzustellen, die sich besonders, wenn auch nicht ausschließlich, für den Einsatz in Kraftfahrzeug-Scheinwerfersystemen eignet, wobei ein guter Wirkungsgrad bei günstigen Kosten und somit eine Vermeidung der oben genannten Nachteile im Vordergrund stehen sollen.

Diese Aufgabe wird mit einer Speiseschaltung der eingangs genannten Art gemäß Anspruch 1 gelöst, bei
welcher erfindungsgemäß der Vorwandler als kapazitive Vorwandler ausgebildet ist, der einen zwischen der primären Gleichspannung und einem Zwischenkreiskondensator liegenden gesteuerten Längsschalter aufweist, der von einem PWM-Ausgang eines Mikrocontrollers angesteuert ist, wobei einem Eingang des Mikrocontrollers ein der primären Gleichspannung proportionaler Spannungswert zugeführt ist und der Mikrocontroller eine Look-Up Tabelle mit einer Relation zwischen dem Wert des zugeführten Spannungswertes und dem Tastverhältnis eines Signals am PWM-Ausgang enthält, um die primäre Gleichspannung in die Zwischenkreisspannung mit dem für den LED-Kreis gewünschten festgelegten Wert zu wandeln, wobei der LED-Stromkreis an dem Zwischenkreiskondensator liegt.

Die Erfindung geht dabei von einer Modifizierung linearer Regler aus, wobei nun die erhaltene Lösung zu einem geringen Bauteilaufwand, niedrigen Herstellungskosten, einer hohen Stromgenauigkeit und reduzierter Verlustleistung führt.

Bei einer zweckmäßigen Ausführungsform der Erfindung ist vorgesehen, dass der gesteuerte Längsschalter zweckmäßigerweise einen Schalttransistor beinhaltet.

Die Erfindung samt weiteren Vorteilen ist im Folgenden an Hand beispielsweiser Ausführungsformen näher erläutert, die in der Zeichnung veranschaulicht sind. In dieser zeigen
Fig. 1 eine Speiseschaltung für LEDs nach dem Stand der Technik mit einem analogen Linearregler,
Fig. 2 ein Prinzipschaltbild einer Speiseschaltung für LEDs nach der Erfindung mit einer kapazitiven Vorwandlung,
Fig. 3 eine Ausführungsform einer Speiseschaltung für LEDs nach der Erfindung mit einem gesteuerten Schalter im Längszweig,
Fig. 4 eine Speiseschaltung nach Fig. 3 in detaillierter Darstellung mit einem Mikrocontroller und
Fig. 5 eine weitere Ausführungsform einer Speiseschaltung für LEDs nach der Erfindung, bei welcher für die kapazitive Vorwandlung eine Ladungspumpe vorgesehen ist.

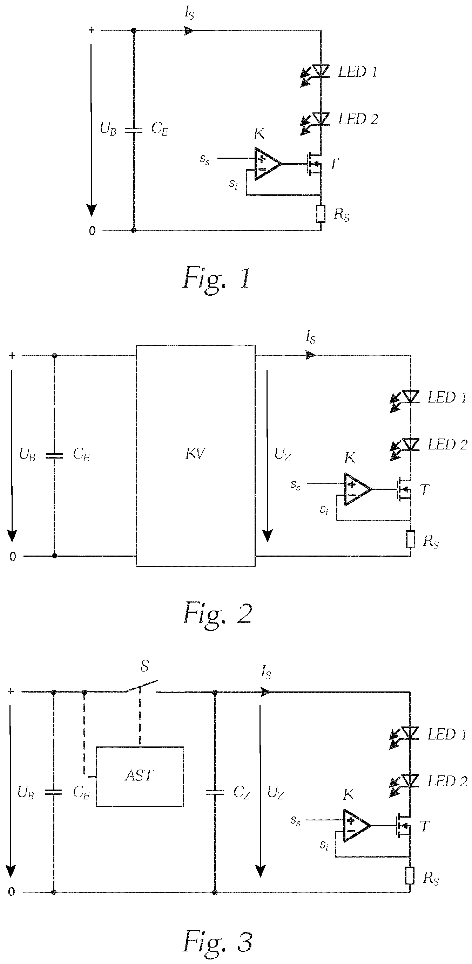

**Fig. 1** zeigt eine Speiseschaltung zur Versorgung von LEDs, hier einer Serienschaltung von zwei LEDs **LED1, LED2,** aus einer primären Gleichspannung **U_{B}.** In dem zugehörigen Stromkreis, in welchem ein Strom Is fließt, liegen weiters ein Regeltransistor **T** und ein hier als Widerstand ausgebildeter Stromfühler **R_{S}.** Es ist weiters ein Komparator **K** vorgesehen, dessen Ausgang mit dem Steuereingang des Regeltransistors T verbunden ist, wobei einem ersten Eingang des Komparators K ein Sollwert **sₛ** für den Strom im LED-Stromkreis und einem zweiten Eingang des Komparators K ein vom dem Stromfühler R_{S} erfasster Istwert **sᵢ** des LED-Stromes I_{S}, d.h. ein diesem Strom proportionaler Spannungswert, zugeführt ist. Im Allgemeinen liegt ein Eingangskondensator **C_{E}** parallel zur Versorgungsspannung, der kurzzeitige Spannungsschwankungen bzw. Störungen unterdrückt.

Wenn bei dieser einfachen Speiseschaltung nach dem Stand der Technik beispielsweise an der LED-Serienschaltung 2x3 Volt liegen und die primären Gleichspannung U_{B} im Worst-Case 16 Volt beträgt, liegen am Regeltransistor T ca. 10 Volt an. In Abhängigkeit des eingestellten Stromes entsteht dadurch im Transistor eine hohe Verlustleistung, die oft zu hoch ist, um soweit abgeführt zu werden, dass keine thermische Schäden an Bauelementen entstehen.

**Fig. 2** zeigt schematisch eine Lösung nach der Erfindung, welche darin besteht, zwischen dem analogen, linearen Regler und der primären Gleichspannung U_{B} einen kapazitiven Vorwandler **KV** einzufügen, der in Abhängigkeit von der Höhe der primären Gleichspannung U_{B} diese auf eine Zwischenkreisspannung **U_{Z}** mit einem für den LED-Kreis gewünschten festgelegten Wert wandelt. Hierfür wird mittels einer Logik in Abhängigkeit von der Eingangsspannung die Spannung modifiziert. Beispielsweise wird in der Logik eine Tabelle hinterlegt, welche in Abhängigkeit von der Eingangsspannung die Spannung modifiziert. Hierfür wird in der Logik lediglich eine Tabelle hinterlegt, welche der primären Gleichspannung U_{B} einen PWM-Wert zuordnet, um durch ein Schaltmittel dementsprechend eine gewünschte Zwischenkreisspannung zu erhalten.

Fig. 3 geht hierzu mehr ins Detail und zeigt eine Ansteuerschaltung **AST,** welche einen gesteuerten Längsschalter **S** steuert, der zwischen der primären Gleichspannung U_{B} und einem Zwischenkreiskondensator **C_{Z}** liegt. Der Ansteuerschaltung AST ist die primäre Gleichspannung U_{B} oder ein dieser proportionaler Wert zugeführt und sie steuert den Längsschalter S beispielsweise entsprechend der oben erwähnten Zwischenkreisspannung U_{Z} Tabelle und Logik pulsweitenmoduliert so an, dass sich ein gewünschter Zwischenkreisspannung U_{Z} ergibt. Wenn beispielsweise die primäre Gleichspannung U_{B} zu hoch ist und 16 Volt beträgt, wird entsprechend einem durch die Tabelle vorgegebenen Tastverhältnis für den Schalter S eine Zwischenkreisspannung U_{Z} von 9 Volt erzeugt, sodass am Regeltransistor T lediglich 3 Volt anliegen, falls die Spannung an der Serienschaltung der LEDs 6 Volt beträgt. Die auftretende Verlustleistung und die thermische Belastung sind entsprechend reduziert.

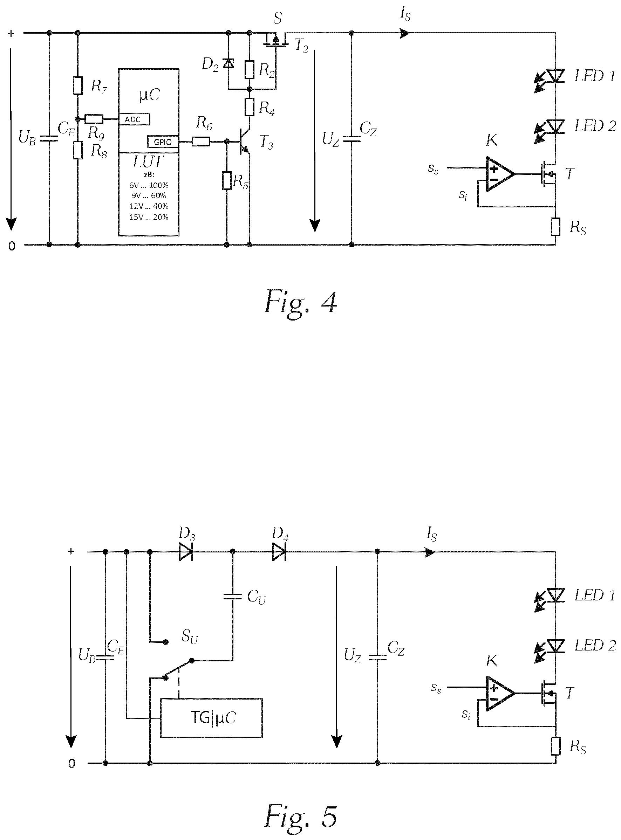

Fig. 4 zeigt weitere Details der Ansteuerschaltung ausgehend von Fig. 3. Der Schalter S ist hier als FET-Transistor **T₂** mit einer üblichen Beschaltung durch einen Widerstand **R₂** und einer Diode **D₂** realisiert und er wird von einem Mikrocontroller **µC** über einen npn-Transistor **T₃** angesteuert. Zwischen Kollektor des Transistors T3 und der Steuerelektrode des Transistors T2 liegt ein Widerstand **R₄,** zwischen der Basis und dem Emitter des Transistors T3 ein Widerstand **R₅.** Der Transistor T3 wird unter Zwischenschaltung eines Widerstandes **R₆** von einem Ausgang **GPIO** (general purpose input/output) des Mikrocontrollers µC angesteuert. Der Mikrocontroller µC besitzt weiters einen Eingang **ADC** (analog to digital conversion), dem ein analoger, der primären Gleichspannung U_{B} proportionaler Spannungswert zugeführt wird, welcher im Mikrocontroller µC in einen digitalen Wert umgewandelt wird. Für die primäre Gleichspannung U_{B} ist ein Spannungsteiler **R₇, R₈** vorgesehen, von dessen Teilungspunkt ein Widerstand **R₉** zu dem Eingang ADC des Mikrocontrollers µC führt. In dem

Mikrocontroller µC ist die erwähnte Tabelle **LUT** enthalten oder ihm zugeordnet, welche in Fig. 4 als LookUpTable bezeichnet ist. Diese Tabelle LUT enthält Werte für das Tastverhältnis des Schalters S in Abhängigkeit von der Höhe der primären Gleichspannung U_{B}, wobei in der Zeichnung vier beispielhafte Werte angegeben sind. Es solle klar sein, dass diese, die Höhe der Zwischenkreisspannung bestimmenden Werte insbesondere von der Spannung an der Serienschaltung der LEDs abhängt und auch von den Daten der verwendeten LEDs und des Regeltransistors T.

Die in **Fig. 5** gezeigte Schaltung zeigt ein Beispiel, bei welchem der kapazitive Vorwandler als Ladungspumpe ausgebildet ist. Diese besteht aus zwei in Durchlassrichtung und in Serie geschaltete Dioden **D3** und **D4** in einem Längszweig zwischen der primären Gleichspannung U_{B} und einem Zwischenkreiskondensator C_{Z}, welcher dem Zwischenkreiskondensator C_{Z} der Fig. 4 entspricht, wobei ein Umladekondensator C_{U} zwischen dem Verbindungspunkt der beiden Dioden und einem von einem Taktgeber **TG** gesteuerten Umschalter **S_{U}** liegt, welcher den Umladekondensator C_{U} jeweils an einen der beiden Pole der primären Gleichspannung U_{B} schaltet. Der Taktgeber TG ist beispielweise in einem Mikrocontroller µC enthalten, der im Prinzip jenem nach Fig. 4 entspricht und gleichfalls eine Tabelle entsprechend der in Fig. 4 gezeigten enthält. Die primäre Gleichspannung U_{B} oder ein dieser proportionaler Wert wird dem Mikrocontroller µC natürlich auch hier zugeführt, wobei der in Fig. 4 dargestellte Spannungsteiler hier der Einfachheit halber weggelassen ist. Auch bei dieser Variante erfolgt ein Umschalten entsprechend dem von dem Mikrocontroller µC vorgegebenen Tastverhältnis entsprechend von in einer Tabelle abgespeicherten Zuordnungen zur primären Gleichspannung U_{B} in einer Weise, welche bereits weiter oben beschrieben wurde und die dazu führt, dass Spannungsschwankungen der primären Gleichspannung U_{B} in einer Weise ausgeglichen werden, welche eine zu hohe thermische Belastung des analog arbeitenden Regeltransistors T vermeidet.

## Patentansprüche

1. Speiseschaltung zur Versorgung eines LED-Stromkreises, in dem zumindest eine LED (LED1, LED2) angeordnet ist, aus einer primären Gleichspannung (U_{B}), wobei die Speiseschaltung einen Vorwandler (KV) und einen Zwischenkreiskondensator (Cz) aufweist, wobei der Vorwandler (KV) ausgebildet ist, zwischen der primären Gleichspannung (UB) und dem LED-Stromkreis angeordnet zu werden und in Abhängigkeit von der Höhe der primären Gleichspannung diese auf eine Zwischenkreisspannung (Uz) mit einem für den LED-Stromkreis gewünschten festgelegten Wert zu wandeln,
**dadurch gekennzeichnet, dass**
der Vorwandler als kapazitiver Vorwandler (KV) ausgebildet ist, der einen Längsschalter (S), einen Mikrocontroller (µC) und einen Spannungsteiler (R7, R8) aufweist,
wobei der Längsschalter (S) ausgebildet ist, im Betrieb zwischen der primären Gleichspannung (UB) und dem Zwischenkreiskondensator (Cz) zu liegen,
wobei der Mikrocontroller (µC) einen PWM-Ausgang ausweist und ausgebildet ist, von dem PWM-Ausgang den Längsschalter zu steuern, und eine Look-Up Tabelle (LUT) mit einer Relation zwischen dem Wert des zugeführten Spannungswertes und dem Tastverhältnis eines Signals am PWM-Ausgang enthält, um die primäre Gleichspannung auf die Zwischenkreisspannung (Uz) mit dem für den LED-Kreis gewünschten festgelegten Wert zu wandeln,
und wobei der Spannungsteiler (R7, R8) ausgebildet ist, im Betrieb an der primären Gleichspannung zu liegen und einen der primären Gleichspannung proportionaler Spannungswert einem Eingang des Mikrocontrollers zuzuführen.

## Claims

1. Supply circuit for supplying an LED circuit, in which at least one LED (LED1, LED2) is arranged, from a primary DC voltage (UB), the supply circuit having a preconverter (KV) and an intermediate circuit capacitor (Cz), the pre-converter (KV) being designed to be arranged between the primary DC voltage (UB) and the LED circuit and, depending on the magnitude of the primary DC voltage, to convert it to an intermediate circuit voltage (Uz) with a fixed value desired for the LED circuit,
**characterised in that**
the pre-converter is designed as a capacitive pre-converter (KV) which has a series switch (S), a microcontroller (µC) and a voltage divider (R7, R8), the series switch (S) being designed to lie between the primary DC voltage (UB) and the intermediate circuit capacitor (Cz) during operation,
wherein the microcontroller (µC) has a PWM output and is adapted to control the series switch from the PWM output and includes a look-up table (LUT) with a relation between the value of the supplied voltage value and the duty cycle of a signal at the PWM output to convert the primary DC voltage to the intermediate circuit voltage (Uz) with the fixed value desired for the LED circuit, and wherein the voltage divider (R7, R8) is adapted to be connected in operation to the primary DC voltage and
to supply a voltage value proportional to the primary DC voltage to an input of the microcontroller.

## Revendications

1. Circuit d'alimentation pour alimenter un circuit LED, dans lequel est disposée au moins une LED (LED1, LED2), à partir d'une tension continue primaire (UB), le circuit d'alimentation comportant un préconvertisseur (KV) et un condensateur de circuit intermédiaire (Cz), le préconvertisseur (KV) étant conçu pour être disposé entre la tension continue primaire (UB) et le circuit LED et, en fonction de la grandeur de la tension continue primaire, pour la convertir en une tension de circuit intermédiaire (Uz) avec une valeur fixe souhaitée pour le circuit LED,
**caractérisé en ce que**
le préconvertisseur est conçu comme un préconvertisseur capacitif (KV) qui comporte un commutateur série (S), un microcontrôleur (µC) et un diviseur de tension (R7, R8), le commutateur série (S) étant conçu pour se situer entre la tension continue primaire (UB) et le condensateur du circuit intermédiaire (Cz) pendant le fonctionnement,
dans lequel le microcontrôleur (µC) a une sortie PWM et est adapté pour commander le commutateur série à partir de la sortie PWM et comprend une table de consultation (LUT) avec une relation entre la valeur de la tension fournie et le rapport cyclique d'un signal à la sortie PWM pour convertir la tension continue primaire en tension de circuit intermédiaire (Uz) avec la valeur fixe souhaitée pour le circuit LED, et dans lequel le diviseur de tension (R7, R8) est adapté pour être connecté en fonctionnement à la tension continue primaire et
pour fournir une valeur de tension proportionnelle à la tension continue primaire à une entrée du microcontrôleur.
